# EUROPÄISCHE PATENTSCHRIFT

(11) **EP 3 515 772 B1**
(45) Veröffentlichungstag und Bekanntmachung des Hinweises auf die Patenterteilung: **10.11.2021**
(21) Anmeldenummer: 17751760.4
(22) Anmeldetag: 14.08.2017
(51) Int. Cl.: B60T 13/74, B60T 8/88

(54) **BREMSSYSTEM-STEUERGERÄT FÜR EIN FAHRZEUG**
BRAKE SYSTEM CONTROL DEVICE FOR A VEHICLE
APPAREIL DE COMMANDE DE SYSTÈME DE FREINAGE POUR UN VÉHICULE

(30) Priorität: 22.09.2016 DE 102016218229
(43) Veröffentlichungstag der Anmeldung: 31.07.2019
(73) Patentinhaber: Robert Bosch GmbH, 70442 Stuttgart (DE)
(72) Erfinder: BAEHRLE-MILLER, Frank, 71101 Schoenaich (DE); REBHOLZ-GOLDMANN, Peter, Yokohama-shi 224-8501 (JP)
(86) Internationale Anmeldenummer: PCT/EP2017/070564
(87) Internationale Veröffentlichungsnummer: WO 2018/054608

(56) Entgegenhaltungen:
- WO-A1-2006/045841
- WO-A1-2010/034676
- CN-A- 104 192 118
- DE-A1-102008 010 094
- DE-A1-102011 084 534
- DE-C1- 10 006 656

## Beschreibung

Die Erfindung bezieht sich auf ein Bremssystem-Steuergerät für ein Fahrzeug mit einer hydraulischen Fahrzeugbremse und mit einer elektromechanischen Bremsvorrichtung, die mindestens einen elektrischen Bremsmotor umfasst.

### Stand der Technik

In der DE 10 2014 204 287 A1 wird ein Bremssystem-Steuergerät für ein Fahrzeug beschrieben, das mit einer hydraulischen Fahrzeugbremse und einer elektromechanischen Parkbremse mit zwei elektrischen Bremsmotoren an den Rädern der Hinterachse ausgestattet ist. Über das Steuergerät kann das Bremssystem in der Weise angesteuert werden, dass in einer Normalbetriebsart die elektrischen Bremsmotoren beispielsweise zum Durchführen eines Parkvorgangs selbsttätig angesteuert werden können. In einer Sicherheitsbetriebsart wird dagegen eine Aktivierung der elektrischen Bremsmotoren verhindert. Die Sicherheitsbetriebsart wird während des regulären Fahrbetriebs eingestellt, um zu verhindern, dass während der Fahrt versehentlich die Parkbremse aktiviert wird.

Die DE 10 2011 084 534 A1 offenbart ein Steuergerät für ein Bremssystem eines Kraftfahrzeugs, wobei das Bremssystem eine hydraulische Fahrzeugbremse und zusätzlich an den Hinterrädern elektrische Parkbremsaktuatoren aufweist. Das Steuergerät ist redundant ausgelegt und besitzt zwei Mikrocontroller, die über einen Datenbus miteinander verbunden sind. Die Mikrocontroller sind sowohl für die Ansteuerung der hydraulischen Betriebsbremse als auch der Parkbremse mit den elektrischen Parkbremsaktuatoren verantwortlich. Aufgrund der redundanten Auslegung kann bei einer Störung eines Mikrocontrollers der verbliebene zweite Mikrocontroller zumindest einen elektrischen Parkbremsaktuator an einem Rad betätigen.

### Offenbarung der Erfindung

Das erfindungsgemäße Bremssystem-Steuergerät kann in Fahrzeugen mit einem Bremssystem eingesetzt werden, das eine hydraulische Fahrzeugbremse und eine elektromechanische Bremsvorrichtung mit mindestens einem elektrischen Bremsmotor, beispielsweise zwei elektrische Bremsmotoren umfasst. Das Steuergerät umfasst einen Mikrocontroller, über den mindestens eine, vorzugsweise mehrere aktive Bremskomponenten ansteuerbar sind, die einen elektrisch steuerbaren Aktuator zur Beeinflussung des Hydraulikdrucks in der hydraulischen Fahrzeugbremse umfassen. Des Weiteren umfasst das Steuergerät einen System-ASIC (anwendungsspezifischer integrierter Schaltkreis) zum Erfassen von Raddrehzahlsignalen, die als Geschwindigkeitsinformation dem Mikrocontroller zuführbar sind. Darüber hinaus umfasst das Steuergerät einen vom System-ASIC separat ausgebildeten Bremsmotor-ASIC zur Ansteuerung des mindestens einen elektrischen Bremsmotors der elektromechanischen Bremsvorrichtung. Auch im Bremsmotor-ASIC werden Raddrehzahlsignale erfasst. Der Mikrocontroller ist über Kommunikationsschnittstellen sowohl mit dem System-ASIC als auch mit dem Bremsmotor-ASIC verbunden.

Somit liegen Geschwindigkeitsinformationen des Fahrzeugs in beiden ASICs vor und können über die Kommunikationsschnittstellen dem Mikrocontroller mitgeteilt werden. Dem Mikrocontroller stehen somit über den System-ASIC und den Bremsmotor-ASIC die Raddrehzahlinformationen zur Verfügung, die diese über weitere Schnittstellen von den Raddrehzahlsensoren an den Fahrzeugrädern zugeführt bekommen.

Diese Ausführung hat den Vorteil, dass auch bei einem Ausfall des Mikrocontrollers, des System-ASICs oder einer Kommunikationsschnittstelle zwischen dem Mikrocontroller und dem System-ASIC oder zwischen dem Mikrocontroller und dem Bremsmotor-ASIC die elektromechanische Bremsvorrichtung mit dem mindestens einen elektrischen Bremsmotor angesteuert werden kann. Der Ausfall einer Komponente des Steuergeräts beeinflusst nicht den Bremsmotor-ASIC, der unabhängig vom Mikrocontroller in der Lage ist, den mindestens einen elektrischen Bremsmotor anzusteuern. Die Ansteuerung erfolgt insbesondere geschwindigkeitsabhängig; da die Geschwindigkeitsinformationen über die Raddrehzahlsignale im Bremsmotor-ASIC vorliegen, ist dieser in der Lage, aus den Raddrehzahlsignalen die Fahrzeuggeschwindigkeit zu ermitteln und entsprechend geschwindigkeitsabhängig den Bremsmotor anzusteuern. Der Bremsmotor der elektromechanischen Bremsvorrichtung kann gegebenenfalls selbsttätig - ohne Fahrerbetätigung - über den Bremsmotor-ASIC ausgelöst werden, um ergänzend oder alternativ zur hydraulischen Fahrzeugbremse eine Bremskraft zum Abbremsen des Fahrzeugs zu erzeugen. Es ist aber auch möglich, die Betätigung der elektromechanischen Bremsvorrichtung manuell auszulösen, auch wenn eine Komponente des Steuergeräts ausgefallen ist, solange der Bremsmotor-ASIC funktionstüchtig ist.

Im Normalfall - bei funktionstüchtigem Steuergerät ohne Ausfall einer Komponente - erfolgt der reguläre Bremsvorgang vorzugsweise ausschließlich über die hydraulische Fahrzeugbremse, um das Fahrzeug abzubremsen. Die elektromechanische Bremsvorrichtung wird vorteilhafterweise nur als Parkbremse eingesetzt, um eine das Fahrzeug im Stillstand festsetzende Bremskraft zu erzeugen. Gegebenenfalls kann aber auch im Normalfall die elektromechanische Bremsvorrichtung unterstützend zur hydraulischen Fahrzeugbremse aktiviert werden, um zusätzlich zur hydraulischen Bremskraft auch eine elektromechanische Bremskraft zu erzeugen. Die Aktivierung des elektrischen Bremsmotors erfolgt im Normalfall über ein entsprechendes Aktivierungssignal des Mikrocontrollers, das über die Kommunikationsschnittstelle an den Bremsmotor-ASIC übertragen wird.

Die elektromechanische Bremsvorrichtung ist bevorzugt in eine oder mehrere Radbremseinrichtungen der hydraulischen Fahrzeugbremse integriert. In dieser Ausführung kann der Bremskolben in der Radbremseinrichtung sowohl von hydraulischem Bremsfluid der hydraulischen Fahrzeugbremse als auch gleichzeitig oder unabhängig voneinander von dem elektrischen Bremsmotor in Richtung auf die Bremsscheibe verstellt werden. Gemäß vorteilhafter Ausführung umfasst die elektromechanische Bremsvorrichtung jeweils einen elektrischen Bremsmotor an den beiden Radbremseinrichtungen an der Hinterachse des Fahrzeuges.

Gemäß einer weiteren vorteilhaften Ausführung beziehen sich die Raddrehzahlsignale im System-ASIC und die Raddrehzahlsignale im Bremsmotor-ASIC auf unterschiedliche Fahrzeugräder. Vorteilhafterweise werden in jedem ASIC die Raddrehzahlsignale von jeweils zwei Raddrehzahlsensoren verarbeitet. Beispielsweise können im System-ASIC die Raddrehzahlsignale von Sensoren an den Vorderrädern und im Bremsmotor-ASIC die Raddrehzahlsignale von Sensoren an den Hinterrädern verarbeitet werden. Über die Aufteilung der Raddrehzahlsignale auf beide ASICs ist sichergestellt, dass auch bei einem Ausfall beispielsweise des Mikrocontrollers der Bremsmotor über den Bremsmotor-ASIC selbsttätig angesteuert werden kann.

Gemäß noch einer weiteren zweckmäßigen Ausführung erfolgt die selbsttätige, geschwindigkeitsabhängige Ansteuerung des Bremsmotors über den Bremsmotor-ASIC nicht nur bei einem Ausfall des Mikrocontrollers, sondern auch bei einem Ausfall des System-ASICs und/oder einem Ausfall einer Kommunikationsschnittstelle zwischen dem Mikrocontroller und dem System-ASIC bzw. zwischen dem Mikrocontroller und dem Bremsmotor-ASIC. In alternativer Ausführung kann es aber auch zweckmäßig sein, die reguläre Bremsfunktion der hydraulischen Fahrzeugbremse ohne Betätigung des elektrischen Bremsmotors auch bei einem Ausfall des System-ASICs oder einem Ausfall einer Kommunikationsschnittstelle aufrechtzuerhalten, solange der Mikrocontroller noch intakt ist.

Gemäß noch einer weiteren vorteilhaften Ausführung ist im Bremsmotor-ASIC mindestens eine elektronische H-Brücke zur Ansteuerung des elektrischen Bremsmotors enthalten. In bevorzugter Ausführung weist der Bremsmotor-ASIC eine der Anzahl an elektrischen Bremsmotoren entsprechende Anzahl an elektronischen H-Brücken auf. Somit ist über jeweils eine H-Brücke ein elektrischer Bremsmotor über den Bremsmotor-ASIC ansteuerbar. Über die H-Brücke kann der betreffende elektrische Bremsmotor in beide Richtungen angesteuert werden, so dass über den Bremsmotor-ASIC sowohl ein Zuspannen des Bremsmotors zum Erzeugen von elektromechanischer Bremskraft als auch ein Lösen des Bremsmotors zum Abbau der elektromechanischen Bremskraft durchgeführt werden kann. Die H-Brücke kann auch in eine Neutralstellung geschaltet werden, in der der zugeordnete Bremsmotor ausgeschaltet ist.

Gemäß noch einer weiteren zweckmäßigen Ausführung weist der Bremsmotor-ASIC eine Logikeinheit zur Erfassung des Schaltzustandes eines Betätigungsschalters auf, über den die elektromechanische Bremsvorrichtung manuell vom Fahrer ein- bzw. ausgeschaltet werden kann. Über die Logikeinheit kann der aktuelle Schalterzustand erfasst werden. Des Weiteren läuft vorteilhafterweise auch die Kommunikationsschnittstelle zur Kommunikation mit dem Mikrocontroller über die Logikeinheit bzw. bildet die Logikeinheit einen Bestandteil der Kommunikationsschnittstelle zum Mikrocontroller.

Gemäß noch einer weiteren vorteilhaften Ausführung werden im System-ASIC zusätzlich zu den Geschwindigkeitssignalen auch Motordrehlagesignale des elektrischen Bremsmotors verarbeitet. Die Motordrehlagesignale stammen von einem Motordrehlagesensor, beispielsweise einem Hall-Sensor zur Ermittlung der aktuellen Drehlage der Rotorwelle des elektrischen Bremsmotors. Bei mehreren elektrischen Bremsmotoren werden entsprechend mehrere Motordrehlagesignale dem System-ASIC zugeführt. Die Motordrehlagesignale können im Mikrocontroller für eine variable Ansteuerung der elektrischen Bremsmotoren verwendet werden, beispielsweise über eine PWM-Ansteuerung.

In alternativer Ausführung wird auf Motordrehlagesignale verzichtet; in diesem Fall erfolgt die Ansteuerung vorteilhafterweise kontinuierlich bzw. quasikontinuierlich.

Die Logikeinheit in dem Bremsmotor-ASIC kann in der Weise ausgestaltet sein, dass bei einem Ausfall des Mikrocontrollers oder bei einem Teilausfall der Raddrehzahlsignale über eine Ansteuerung des elektrischen Bremsmotors das Fahrzeug verzögert bzw. eine Parkbremskraft im Fahrzeug erzeugt wird. Hierbei kann anhand des gemessenen Motorstroms im elektrischen Bremsmotor eine an den jeweiligen Verzögerungswunsch angepasste Bremsstrategie realisiert werden. Zum Beispiel kann für die Parkbremsfunktion und das dauerhafte Bereitstellen einer das Fahrzeug festsetzenden Parkbremskraft im Anschluss an den Einschaltpeak des Motorstroms und des sich daran anschließenden Leerlaufstroms der mit dem Kraftaufbau einhergehende Anstieg im Motorstrom ermittelt und zur Realisierung einer treppenförmig ansteigenden elektromechanischen Bremskraft der elektrische Bremsmotor vorübergehend abgeschaltet werden, wobei aufgrund der Selbsthemmung die Bremskraft erhalten bleibt. Daraufhin wird erneut der Bremsmotor eingeschaltet, bis die nächste Kraftstufe erreicht ist. Diese Vorgehensweise wird so lange wiederholt, bis die für das Festsetzen des Fahrzeugs im Stillstand erforderliche Parkbremskraft in Treppenstufen erreicht ist. Gegebenenfalls kann eine PWM-Ansteuerung erfolgen, in der der Stromanstieg eingestellt wird, der für die Höhe der Treppenstufen im Bremskraftverlauf verantwortlich ist.

Des Weiteren ist es auch möglich, eine schlupfabhängige Verzögerung über eine entsprechende Ansteuerung des elektrischen Bremsmotors einzustellen. Hierbei werden verschiedene Radgeschwindigkeiten miteinander verglichen. Ist ein Maximalschlupf überschritten, wird der elektrische Bremsmotor wieder geöffnet, bis eine untere Schlupfschwelle erreicht ist. Ist dagegen der Schlupf zu gering, wird der elektrische Bremsmotor in Zuspannrichtung zum Erhöhen der Bremskraft angesteuert.

Bei dem Verfahren zum Betrieb des Bremssystem-Steuergerätes erfolgt im Normalbetrieb - bei funktionstüchtigem Mikrocontroller - die Ansteuerung vorzugsweise sämtlicher aktiver Bremskomponenten über den Mikrocontroller durch eine entsprechende Erzeugung von Steuersignalen. Soll beispielsweise eine Parkbremskraft über den elektrischen Bremsmotor erzeugt werden, so erzeugt der Mikrocontroller Steuersignale, die über die Kommunikationsschnittstelle dem Bremsmotor-ASIC zugeführt werden, in welchem entsprechend der elektrische Bremsmotor angesteuert wird.

Bei einem Ausfall des Mikrocontrollers wird dagegen selbsttätig im Bremsmotor-ASIC der elektrische Bremsmotor zur Erzeugung einer Bremskraft angesteuert. Dies erfolgt insbesondere geschwindigkeitsabhängig, wofür die im Bremsmotor-ASIC vorliegenden Raddrehzahlsignale verarbeitet werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich mit einer elektromechanischen Bremsvorrichtung mit einem elektrischen Bremsmotor ausgestattet sind,
- Fig. 2: einen Schnitt durch eine elektromechanische Bremsvorrichtung mit einem elektrischen Bremsmotor,
- Fig. 3: einen Funktionsplan eines Steuergeräts des Bremssystems mit hydraulischer Fahrzeugbremse und elektromechanischer Bremsvorrichtung.

In den Figuren sind gleiche Bauteile mit gleichen Bezugszeichen versehen.

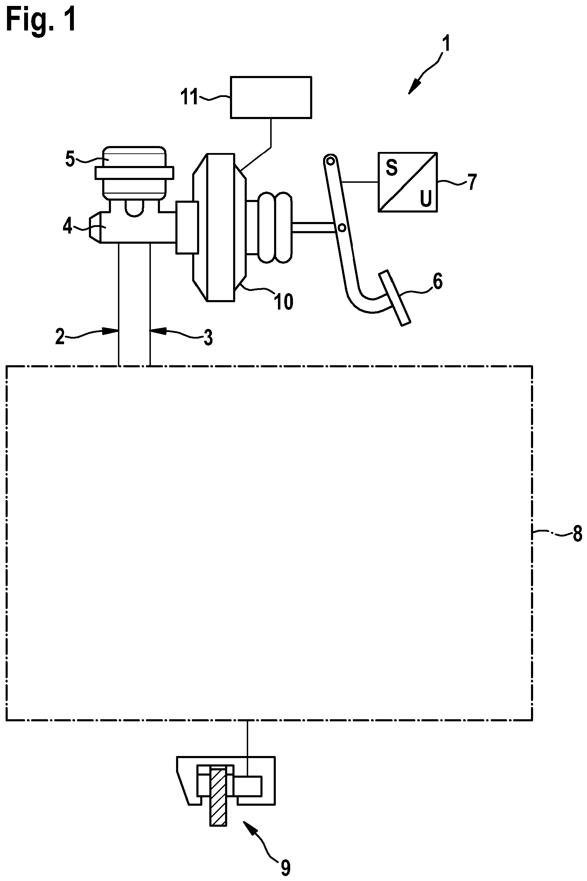

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die Bremskreise können auch als zwei Diagonalbremskreise mit jeweils einem Vorderrad und einem diagonal dazu angeordneten Hinterrad ausgebildet sein.

Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster). Der Bremskraftverstärker 10 stellt eine aktive Bremskomponente zur Beeinflussung des hydraulischen Bremsdrucks dar.

Die vom Pedalwegsensor 7 gemessene Stellbewegung des Bremspedals 6 wird als Sensorsignal an ein Steuergerät 11 des Bremssystems übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist. Auch die Hydraulikpumpe ist eine aktive Bremskomponente zur Beeinflussung des hydraulischen Bremsdrucks.

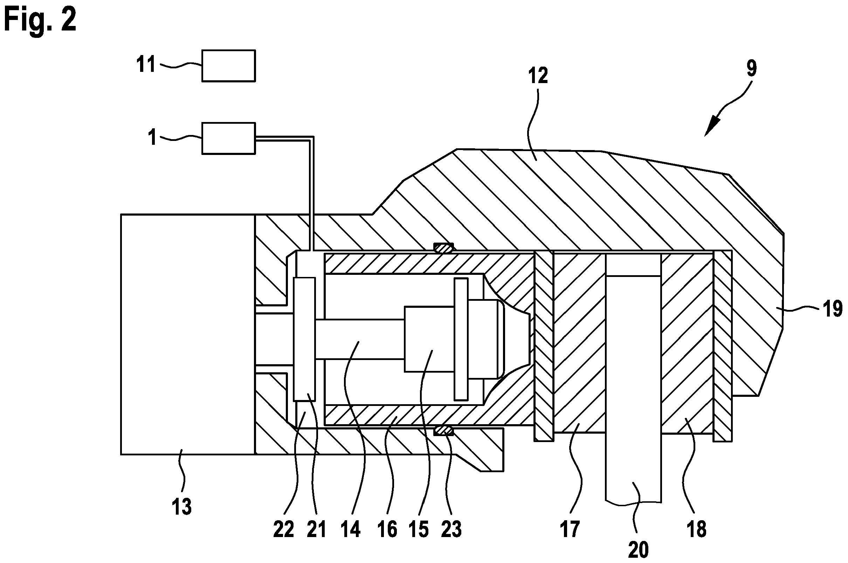

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung eine Motor-Getriebe-Einheit mit einem Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Endanschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird. Die Spindelmutter 15 stellt ein Übertragungsglied zwischen dem Bremsmotor und dem Bremskolben dar.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Steuergerät 11 erzeugt.

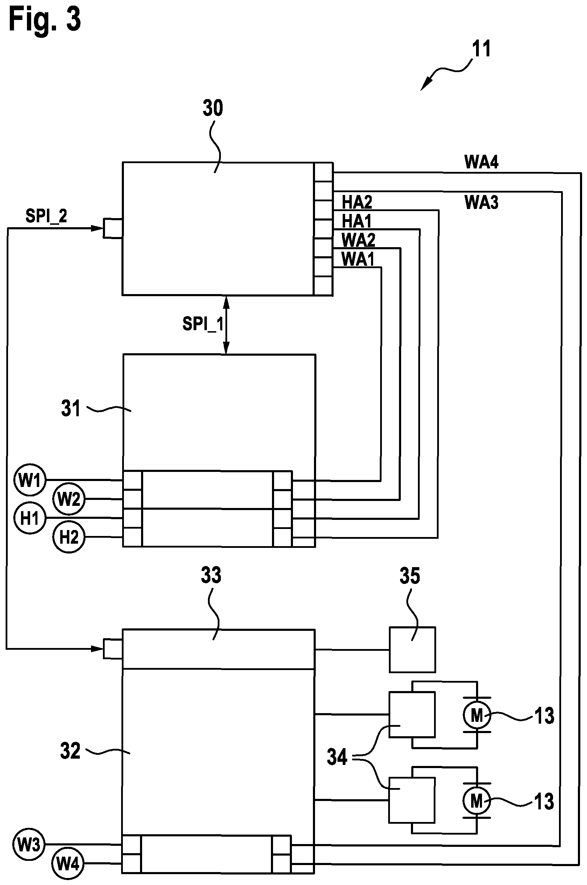

In Fig. 3 ist ein Funktionsplan des Steuergerätes 11 dargestellt, das einen Mikrocontroller 30, einen System-ASIC 31 und einen Bremsmotor-ASIC 32 umfasst. Der Mikrocontroller ist über eine Kommunikationsschnittstelle SPI_1 mit dem System-ASIC 31 und über eine weitere Kommunikationsschnittstelle SPI_2 mit dem Bremsmotor-ASIC 32 verbunden.

Im System-ASIC 31 werden Raddrehzahlsignale W1 und W2, die von Raddrehzahlsensoren an zwei Rädern des Fahrzeugs stammen, empfangen und aufbereitet. Ebenso werden im System-ASIC 31 Motordrehlagesignale H1 und H2 von Hall-Sensoren an den beiden elektrischen Bremsmotoren der elektromechanischen Bremsvorrichtung empfangen und verarbeitet. Die verarbeiteten Raddrehzahlsignale WA1 und WA2 sowie die verarbeiteten Motordrehlagesignale HA1 und HA2 werden dem Mikrocontroller 30 zur Verfügung gestellt.

Der Bremsmotor-ASIC 32 umfasst eine Logikeinheit 33, die über die Kommunikationsschnittstelle SPI_2 mit dem Mikrocontroller 30 kommuniziert. Im Bremsmotor-ASIC 32 werden weitere Raddrehzahlsignale W3 und W4 empfangen, die von weiteren Raddrehzahlsensoren an weiteren Fahrzeugrädern stammen. Beispielsweise betreffen die Raddrehzahlsignale W1 und W2 im System-ASIC 31 die Vorderräder und die Raddrehzahlsignale W3 und W4 im Bremsmotor-ASIC die Hinterräder des Fahrzeuges. Die verarbeiteten Raddrehzahlsignale WA3 und WA4 werden vom Bremsmotor-ASIC 32 dem Mikrocontroller 30 zur Verfügung gestellt.

Zum Bremsmotor-ASIC 32 gehören außerdem als elektronische Schaltungen zwei H-Brücken 34, die jeweils einem elektrischen Bremsmotor 13 der elektromechanischen Bremsvorrichtung zugeordnet sind. Die H-Brücken 34 werden über den Bremsmotor-ASIC 32 angesteuert und regeln die Funktionen der elektrischen Bremsmotoren 13, die je nach Ansteuerung zum Erzeugen einer Bremskraft zugespannt, zum Abbau einer Bremskraft geöffnet oder abgeschaltet werden.

Über die Logikeinheit 33 des Bremsmotor-ASICs 32 kann der Schaltzustand eines Betätigungsschalters 35 erfasst werden, mit dem die elektromechanische Bremsvorrichtung manuell vom Fahrer ein- bzw. ausgeschaltet sowie im Falle des Einschaltens die Betätigungsrichtung der elektrischen Bremsmotoren gesteuert wird. Im regulären Fall, bei voll funktionstüchtigem Mikrocontroller 30, wird zur Realisierung der Parkbremse zum Festsetzen des Fahrzeugs im Stillstand die Parkbremse manuell über den Betätigungsschalter 35 vom Fahrer betätigt, woraufhin im Bremsmotor-ASIC 32 Ansteuerungssignale zur Ansteuerung der elektrischen Bremsmotoren 13 über die H-Brücken 34 erzeugt und die elektrischen Bremsmotoren 13 zum Erzeugen elektromechanischer Bremskraft zugespannt werden. Hierbei wird die Position des Betätigungsschalters 35 über die Logikeinheit 33 erfasst und das Ergebnis dem Mikrocontroller 30 zur Verfügung gestellt. Im Mikrocontroller 30 erfolgt die Auswertung des Fahrerwunsches sowie der Ablauf des Programms zur Ansteuerung der Bremsmotoren 13, wobei das Ergebnis des Programms zur Ansteuerung der Bremsmotoren 13 dem Bremsmotor-ASIC 32 bereitgestellt wird und dieser dann Bremsmotoren 13 entsprechend der über die Kommunikationsschnittstelle SPI_2 bereitgestellten Information ansteuert. Während der Ansteuerung werden die im Bremsmotor-ASIC 30 erfassten Messgrößen, insbesondere Strom und Spannung der Bremsmotoren 13, über die Kommunikationsschnittstelle SPI_2 dem Mikrocontroller 30 zur Verfügung gestellt. Somit ist das Programm zur Steuerung der Bremsmotoren 13 zu jedem Zeitpunkt über den Zustand der Bremsmotoren 13 informiert und kann bei erreichter Sollbremskraft oder erreichtem Löseweg die Ansteuerung wieder selbsttätig unterbrechen.

Bei einem Ausfall des Mikrocontrollers 30 bleibt die Funktionalität des Bremsmotor-ASICs 32 erhalten, da die Ansteuerung der elektrischen Bremsmotoren 13 über die H-Brücken 34 ausschließlich über den Bremsmotor-ASIC 32 erfolgt. Es ist somit möglich, auch bei einem Ausfall des Mikrocontrollers 30 die Parkbremse manuell oder automatisch zu aktivieren.

Um zu geringe Klemmkräfte zu vermeiden, kann es zweckmäßig sein, im Zuspannvorgang einen Abschaltstrom zu wählen, der auch unter ungünstigen Spannungslagen und Bremsmotortemperaturen zu einer ausreichenden Klemmkraft führt.

Des Weiteren ist es möglich, bei einem Ausfall des Mikrocontrollers 30 die elektromechanische Bremsvorrichtung mit den Bremsmotoren 13 zur Erzeugung einer Bremskraft bei fahrendem Fahrzeug einzusetzen, um beispielsweise den Ausfall eines hydraulischen Aktuators zu kompensieren. In diesem Fall erfolgt die Ansteuerung der elektrischen Bremsmotoren geschwindigkeitsabhängig, wofür die Geschwindigkeitsinformationen über die Raddrehzahlsignale W3 und W4 im Bremsmotor-ASIC 32 berücksichtigt werden.

## Patentansprüche

1. Steuergerät für ein Fahrzeugbremssystem mit einer hydraulischen Fahrzeugbremse und mit einer elektromechanischen Bremsvorrichtung mit mindestens einem elektrischen Bremsmotor (13), mit einem Mikrocontroller (30) zur Ansteuerung mindestens einer als ein elektrisch steuerbarer Aktuator zur Beeinflussung des Hydraulikdrucks in der hydraulischen Fahrzeugbremse ausgebildeten aktiven Bremskomponente, **dadurch gekennzeichnet, dass** das Bremssystem-Steuergerät (11) einen System-ASIC (31) zum Erfassen von Raddrehzahlsignalen und einen Bremsmotor-ASIC (32) zur Ansteuerung des elektrischen Bremsmotors (13) der elektromechanischen Bremsvorrichtung umfasst, wobei im Bremsmotor-ASIC (32) ebenfalls Raddrehzahlsignale erfassbar sind, wobei der Mikrocontroller (30) über Kommunikationsschnittstellen (SPI_1, SPI_2) mit dem System-ASIC (31) und dem Bremsmotor-ASIC (32) verbunden ist.

2. Steuergerät nach Anspruch 1, **dadurch gekennzeichnet, dass** die Raddrehzahlsignale im System-ASIC (31) und die Raddrehzahlsignale im Bremsmotor-ASIC (32) sich auf unterschiedliche Fahrzeugräder beziehen.

3. Steuergerät nach Anspruch 1 oder 2, **dadurch gekennzeichnet, dass** im Bremsmotor-ASIC (32) mindestens eine elektronische H-Brücke (34) zur Ansteuerung des elektrischen Bremsmotors (13) enthalten ist.

4. Steuergerät nach einem der Ansprüche 1 bis 3, **dadurch gekennzeichnet, dass** in den Bremsmotor-ASIC (32) eine Logikeinheit (33) zur Erfassung des Schaltzustandes eines Betätigungsschalters (35) der elektromechanischen Bremsvorrichtung integriert ist.

5. Steuergerät nach einem der Ansprüche 1 bis 4, **dadurch gekennzeichnet, dass** die Logikeinheit (33) im Bremsmotor-ASIC (32) aus den Raddrehzahlsignalen die Fahrzeuggeschwindigkeit berechnet.

6. Steuergerät nach einem der Ansprüche 1 bis 5, **dadurch gekennzeichnet, dass** im System-ASIC (31) zusätzlich Motordrehlagesignale des elektrischen Bremsmotors (13) erfasst werden.

7. Verfahren zum Betrieb eines Bremssystem-Steuergeräts nach einem der Ansprüche 1 bis 6, wobei im Normalbetrieb mit funktionstüchtigen Komponenten des Steuergeräts im Mikrocontroller (30) bedarfsweise Steuersignale zur Ansteuerung mindestens einer aktiven Bremskomponente erzeugt werden und bei einem Ausfall des Mikrocontrollers (30), des System-ASICs (31) oder einer Kommunikationsschnittstelle (SPI_1, SPI_2) geschwindigkeitsabhängig über den Bremsmotor-ASIC (32) der elektrische Bremsmotor (13) zur Erzeugung einer Bremskraft angesteuert wird.

8. Bremssystem in einem Fahrzeug, mit einer hydraulischen Fahrzeugbremse (1) und einer elektromechanischen Bremsvorrichtung mit einem elektrischen Bremsmotor (13), mit einem Steuergerät (11) nach einem der Ansprüche 1 bis 6 zur Ansteuerung der einstellbaren Bremssystemkomponenten des Bremssystems, wobei die hydraulische Fahrzeugbremse (1) mit einem elektrisch steuerbaren Aktuator (10) zur Beeinflussung des Hydraulikdrucks, z. B. einem iBooster ausgestattet ist.

9. Bremssystem nach Anspruch 8, **dadurch gekennzeichnet, dass** die Radbremseinrichtungen (9) an der Hinterachse des Fahrzeugs mit elektrischen Bremsmotoren ausgestattet sind.

10. Fahrzeug mit einem Bremssystem nach Anspruch 8 oder 9.

## Claims

1. Control device for a vehicle brake system with a hydraulic vehicle brake and with an electromechanical brake device with at least one electric brake motor (13), with a microcontroller (30) for actuating at least one active brake component which is designed as an electrically controllable actuator for influencing the hydraulic pressure in the hydraulic vehicle brake, **characterized in that** the brake system control device (11) comprises a system ASIC (31) for detecting wheel revolution rate signals and a brake motor ASIC (32) for actuating the electric brake motor (13) of the electromechanical brake device, wherein wheel revolution rate signals can also be detected in the brake motor ASIC (32), wherein the microcontroller (30) is connected to the system ASIC (31) and the brake motor ASIC (32) via communications interfaces (SPI_1, SPI_2).

2. Control device according to Claim 1, **characterized in that** the wheel revolution rate signals in the system ASIC (31) and the wheel revolution rate signals in the brake motor ASIC (32) relate to different wheels of the vehicle.

3. Control device according to Claim 1 or 2, **characterized in that** the brake motor ASIC (32) contains at least one electronic H-bridge (34) for actuating the electric brake motor (13).

4. Control device according to any one of Claims 1 to 3, **characterized in that** a logic unit (33) for detecting the switching state of an actuating switch (35) of the electromechanical brake device is integrated within the brake motor ASIC (32).

5. Control device according to any one of Claims 1 to 4, **characterized in that** the logic unit (33) in the brake motor ASIC (32) calculates the speed of the vehicle from the wheel revolution rate signals.

6. Control device according to any one of Claims 1 to 5, **characterized in that** motor angular position signals of the electric brake motor (13) are additionally detected in the system ASIC (31).

7. Method for operating a brake system control device according to any one of Claims 1 to 6, wherein in normal operation with working components of the control device control signals for actuating at least one active brake component are produced in the microcontroller (30) as required, and in the event of a failure of the microcontroller (30), of the system ASIC (31) or of a communications interface (SPI_1, SPI_2), the electric brake motor (13) is actuated by means of the brake motor ASIC (32) depending on the speed for producing a braking force.

8. Brake system in a vehicle, with a hydraulic vehicle brake (1) and an electromechanical brake device with an electric brake motor (13), with a control device (11) according to any one of Claims 1 to 6 for actuating the adjustable brake system components of the brake system, wherein the hydraulic vehicle brake (1) is fitted with an electrically controllable actuator (10) for influencing the hydraulic pressure, for example an iBooster.

9. Brake system according to Claim 8, **characterized in that** the wheel brake devices (9) on the rear axle of the vehicle are fitted with electric brake motors.

10. Vehicle with a brake system according to Claim 8 or 9.

## Revendications

1. Appareil de commande pour un système de freinage de véhicule, comprenant un frein de véhicule hydraulique et un dispositif de freinage électromécanique doté d'au moins un moteur de frein électrique (13), un microcontrôleur (30) pour piloter au moins un composant de frein actif, réalisé sous la forme d'un actionneur à commande électrique destiné à influencer la pression hydraulique dans le frein de véhicule hydraulique,
**caractérisé en ce que** l'appareil de commande de système de freinage (11) comprend un ASIC de système (31) pour détecter des signaux de vitesse de rotation de roue et un ASIC de moteur de frein (32) pour piloter le moteur de frein électrique (13) du dispositif de freinage électromécanique, des signaux de vitesse de rotation de roue pouvant également être détectés dans l'ASIC de moteur de frein (32), le microcontrôleur (30) étant relié à l'ASIC de système (31) et à l'ASIC de moteur de frein (32) par des interfaces de communication (SPI_1, SPI_2).

2. Appareil de commande selon la revendication 1, **caractérisé en ce que** les signaux de vitesse de rotation de roue dans l'ASIC de système (31) et les signaux de vitesse de rotation de roue dans l'ASIC de moteur de frein (32) se réfèrent à différentes roues de véhicule.

3. Appareil de commande selon la revendication 1 ou 2, **caractérisé en ce que** l'ASIC de moteur de frein (32) contient au moins un pont en H électronique (34) pour piloter le moteur de frein électrique (13).

4. Appareil de commande selon l'une quelconque des revendications 1 à 3, **caractérisé en ce qu'**une unité logique (33) pour détecter l'état de commutation d'un commutateur d'actionnement (35) du dispositif de freinage électromécanique est intégrée dans l'ASIC de moteur de frein (32).

5. Appareil de commande selon l'une quelconque des revendications 1 à 4, **caractérisé en ce que** l'unité logique (33) dans l'ASIC de moteur de frein (32) calcule la vitesse de véhicule à partir des signaux de vitesse de rotation de roue.

6. Appareil de commande selon l'une quelconque des revendications 1 à 5, **caractérisé en ce qu'**en outre des signaux de position de rotation de moteur du moteur de frein électrique (13) sont détectés dans l'ASIC de système (31).

7. Procédé permettant de faire fonctionner un appareil de commande de système de freinage selon l'une quelconque des revendications 1 à 6, dans lequel, en fonctionnement normal avec des composants opérationnels de l'appareil de commande, des signaux de commande pour piloter au moins un composant de frein actif sont générés dans le microcontrôleur (30) en cas de besoin, et en cas de défaillance du microcontrôleur (30), de l'ASIC de système (31) ou d'une interface de communication (SPI 1, SPI 2), le moteur de frein électrique (13) est piloté en fonction de la vitesse, par l'intermédiaire de l'ASIC de moteur de frein (32), pour générer une force de freinage.

8. Système de freinage dans un véhicule, comprenant un frein de véhicule hydraulique (1) et un dispositif de freinage électromécanique doté d'un moteur de frein électrique (13), un appareil de commande (11) selon l'une quelconque des revendications 1 à 6 pour piloter les composants de système de freinage réglables du système de freinage, le frein de véhicule hydraulique (1) étant équipé d'un actionneur (10) à commande électrique, par exemple d'un iBooster, destiné à influencer la pression hydraulique.

9. Système de freinage selon la revendication 8, **caractérisé en ce que** les dispositifs de frein de roue (9) sur l'essieu arrière du véhicule sont équipés de moteurs de frein électriques.

10. Véhicule comprenant un système de freinage selon la revendication 8 ou 9.
